# FASCICULE DE BREVET EUROPEEN

(11) **EP 3 099 908 B1**
(45) Date de publication et mention de la délivrance du brevet: **29.04.2020**
(21) Numéro de dépôt: 15700652.9
(22) Date de dépôt: 12.01.2015
(51) Int. Cl.: F02B 23/06, F02M 61/18, F02M 45/08, F02B 1/12

(54) **MOTEUR À COMBUSTION À INJECTION DIRECTE DE COMBUSTIBLE ET PLUS PARTICULIÈREMENT MOTEUR À ALLUMAGE PAR COMPRESSION AVEC FAIBLE TAUX DE COMPRESSION**
BRENNKRAFTMASCHINE MIT DIREKTEINSPRITZUNG UND INSBESONDERE KOMPRESSIONSGEZÜNDETE BRENNKRAFTMASCHINE MIT NIEDRIGEM VERDICHTUNGSVERHÄLTNIS
DIRECT FUEL INJECTION COMBUSTION ENGINE AND MORE PARTICULARLY A COMPRESSION-IGNITION ENGINE HAVING A LOW COMPRESSION RATIO

(30) Priorité: 29.01.2014 FR 1450704
(43) Date de publication de la demande: 07.12.2016
(73) Titulaire: IFP Energies nouvelles, 92500 Rueil-Malmaison (FR)
(72) Inventeur: RICHARD, Stéphane, F-78550 Bazainville (FR); MARTINEZ, Lionel, F-78550 Maulette (FR); LAGET, Olivier, F-92500 Rueil-Malmaison (FR)
(74) Mandataire: IFP Energies nouvelles
(86) Numéro de dépôt international: PCT/EP2015/050410
(87) Numéro de publication internationale: WO 2015/113803

(56) Documents cités:
- DE-A1-102011 017 479
- FR-A1- 2 868 480
- FR-A1- 2 878 906
- FR-A1- 2 879 676
- FR-A1- 2 912 184
- JP-A- H0 571 347

## Description

La présente invention se rapporte à un moteur à combustion à injection directe de combustible et plus particulièrement à un moteur à allumage par compression et à un procédé utilisant un tel moteur.

Elle concerne plus particulièrement un tel moteur utilisable dans le domaine aéronautique ou routier ou dans le domaine des installations stationnaires, comme un groupe électrogène.

Ce type de moteur comprend généralement au moins un cylindre, un piston comprenant un téton disposé dans un bol concave et coulissant dans ce cylindre en un mouvement rectiligne alternatif, des moyens d'admission d'un comburant, des moyens d'échappement de gaz brûlés, une chambre de combustion, et des moyens d'injection pour injecter un combustible dans la chambre de combustion.

Comme cela est généralement admis, lors de la conception d'un moteur, les contraintes de performances, d'émissions de polluants et de tenue mécanique de la chambre de combustion sont de plus en plus fortes alors que les moyens de les satisfaire sont opposés.

Ainsi l'augmentation des performances entrainent généralement une augmentation des émissions de polluants et des contraintes mécaniques plus fortes.

Pour pallier ces contraintes et de manière à garantir une émission de polluants limitée et une tenue mécanique satisfaisante sur toute la plage de fonctionnement du moteur et en particulier à très forte charge, l'utilisation de la totalité du comburant présent dans la chambre de combustion, par exemple un comburant comprenant de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

En pratique, le combustible reste confiné dans le bol et ne peut pas se mélanger au comburant situé notamment dans la chasse, c'est-à-dire dans le volume localisé dans la partie haute de la chambre de combustion délimité par la paroi du cylindre et la face de la culasse en regard du piston.

Ceci a pour inconvénients de créer des zones à fortes richesses dans la chambre de combustion engendrant une forte production de suies, d'oxyde de carbone (CO) et d'hydrocarbures imbrûlés (HC) lors de la combustion de ce mélange carburé.

De plus, la charge thermique est concentrée sur le réentrant du piston, c'est-à-dire le col ou la restriction de diamètre de bol qui marque la transition entre le bol du piston et la zone supérieure englobant la chasse, ce qui peut être limitant en termes de tenue mécanique à très fortes charges
Comme cela est mieux décrit dans la demande de brevet JP 5-71347, une des solutions pour remédier aux inconvénients précités consiste à utiliser des moyens d'injection de combustible avec des jets selon au moins deux angles de nappe et un piston comportant un bol avec deux volumes de combustion.

Ceci permet d'utiliser une plus grande quantité de comburant comparé aux moteurs traditionnels et de répartir la charge thermique sur une plus grande surface de la chambre de combustion.

Cependant, cette configuration ne permet pas d'optimiser l'aérodynamique interne dans le but d'utiliser tout le comburant disponible dans les deux volumes de combustion et de minimiser le recouvrement entre les jets de combustibles provenant des différentes nappes. Enfin, cette configuration ne minimise pas le mouillage de la paroi par du combustible liquide.

Pour pallier ces inconvénients, et comme cela est mieux décrit dans la demande de brevet français N° 13 60426 du demandeur, il est prévu d'utiliser un moteur à combustion interne comprenant des moyens d'injection de combustible avec des jets selon au moins deux angles de nappe et un piston comportant un bol avec deux volumes de combustion mais avec une forme de piston et une aérodynamique interne améliorant sensiblement la qualité de la combustion.

La demande de brevet FR 2879676 divulgue un moteur à combustion avec des jets de carburant selon deux angles de nappe dans un volume torique.

La demande de brevet FR 2868480 divulgue un moteur à combustion avec des jets de carburant selon deux angles dans deux zones de la chambre de combustion.

La demande de brevet FR 2878906 divulgue un moteur à combustion avec une chambre de combustion avec une zone toroïdale à fond plat.

Le demande de brevet DE 10 2011 017479 A1 divulgue un moteur à combustion interne à injection directe à allumage par compression avec des jets de carburant selon deux angles dans deux zones de la chambre de combustion.

Néanmoins cette forme est principalement adaptée à des taux de compression élevés, par exemple de l'ordre de 18. En effet, comme les jets de combustible de la nappe inférieure impactent directement la partie torique du bol en tangentant la surface du piston le volume de bol est restreint. Ceci conduit à un volume de bol faible et donc à des taux de compression élevés.

Des moteurs comprenant des chambres de combustion avec des taux de compression plus faibles, par exemple entre 13.5 et 16.5, sont néanmoins avantageux. Ils permettent de réduire la pression maximum en compression dans la chambre de combustion et les efforts sur l'embiellage. Cette baisse est donc particulièrement utile pour des moteurs à hautes performances et à haute densité de puissance.

La présente invention vise donc à apporter un perfectionnement aux moteurs décrits ci-dessus en proposant une forme de piston et un procédé d'injection qui améliore sensiblement la qualité du mélange et la combustion pour des chambres de combustion à taux de compression compris entre 13.5 et 16.5 de manière à obtenir des gains en performances accompagnés de gains importants en consommation et émissions de polluants (CO, oxydes d'azote, imbrûlés, suies) tout en diminuant les contraintes de pression maximum dans la chambre de combustion et les efforts subis par l'embiellage.

L'invention concerne un moteur à combustion interne à injection directe à allumage par compression selon les caractéristiques de la revendication 1 et un procédé d'injection pour un moteur à combustion interne à injection directe à allumage par compression selon les caractéristiques de la revendication 7.

A cet effet, l'invention concerne un moteur à combustion interne à injection directe à allumage par compression comprenant au moins un cylindre, une culasse portant des moyens d'injection de combustible, un piston coulissant dans ce cylindre, une chambre de combustion délimitée sur un côté par la face supérieure du piston comportant un téton s'érigeant en direction de la culasse et disposé au centre d'un bol concave, ledit moteur comportant des moyens d'injection projetant du combustible selon au moins deux nappes de jets de combustible d'angle de nappe différents, une nappe inférieure d'axe de jet C1 et une nappe supérieure d'axe de jet C2, au moins deux zones de mélange de la chambre de combustion, caractérisé en ce que les zones forment une zone basse et une zone haute et en ce que la zone basse comporte un volume torique de centre B avec un fond plat dans lequel sont injectés les jets de combustible de la nappe inférieure d'une manière telle que l'axe C1 des jets de la nappe inférieure soit situé entre le centre B et le téton.

Les nappes de jets de combustible peuvent être situées axialement l'une au-dessus de l'autre.

Les moyens d'injection peuvent comporter au moins deux injecteurs projetant du combustible selon une nappe de jets de combustible d'angle de nappe différent l'un de l'autre.

L'angle de nappe de l'une des nappes est au plus égal à 105° alors que l'angle de nappe de l'autre des nappes est au moins égale à 150°.

Le bol du piston du moteur peut comprendre un volume torique de rayon R1 et R2, un diamètre de fond de bol FD, un diamètre interne de fond de bol FID, un diamètre de l'ouverture de bol BD, un diamètre de col GD, un diamètre d'injection haut ID1, une longueur développée de la coupe diamétrale 2^{∗}Cb du bol, une hauteur H de téton, et une hauteur L du bol, et les dimensions du bol peuvent satisfaire à au moins l'une des condition suivantes :
- le rapport BD/L peut être inférieur à 6, préférentiellement inférieur à 4,
- le rapport FD/BD peut être inférieur à 1,
- FD-FID peut être strictement positif
- le rapport 2^{∗}Cb/BD peut être inférieur à 2,
- le rapport GD/BD peut être compris entre 0.7 et 1,
- le rapport H/L peut être supérieur à 50%, préférentiellement supérieur à 60%
- le rapport R2/R1 peut être inférieur à 1, préférentiellement inférieur à 0.6,
- le rapport ID1/GD peut être supérieur à 1,
- ID1 peut être inférieur à (GD+(2^{∗}Cb-GD)^{∗}2/3).

Le bol peut comprendre un angle d'inclinaison a3 pour le flanc incliné du téton, un angle d'inclinaison a4 formé par l'axe principal des jets de combustible de la nappe inférieure injectés dans le tore en impactant le tore en un point et par la tangente au point d'impact, un angle d'inclinaison a5 considéré à la tangence de la surface arrondie externe avec la paroi latérale, et un angle d'inclinaison a6 par rapport à l'horizontale et la tangente à la paroi sensiblement plane , caractérisé en ce qu'il peut satisfaire à au moins l'une des conditions suivantes :
- a3 peut être sensiblement égale au demi-angle de nappe de jets A1/2 de la nappe basse,
- a4 peut être supérieur à 100°,
- a5 peut être compris entre 0° et 60°, de préférence entre 30° et 40°,
- a6 peut être compris entre 15° et 75.

L'invention concerne également un procédé d'injection pour un moteur à combustion interne à injection directe à allumage par compression comprenant au moins un cylindre, une culasse portant des moyens d'injection de combustible, un piston coulissant dans ce cylindre, une chambre de combustion délimitée sur un côté par la face supérieure du piston comportant un téton s'érigeant en direction de la culasse et disposé au centre d'un bol concave, ledit procédé consistant à injecter le combustible selon au moins deux nappes de jets de combustible d'angle de nappe différents, une nappe inférieure d'axe de jet C1 et une nappe supérieure d'axe de jet C2, caractérisé en ce qu'il consiste, pour une position D du piston considérée entre le fond du bol et l'origine des jets de combustible de la nappe supérieure, correspondant sensiblement à D=L4 + ID1/tan(a2) où L4 est la hauteur entre le fond du bol et le point d'impact des jets de combustible de la nappe supérieure, ID1 est le diamètre d'injection haut considéré entre les points d'impact et a2 qui est le demi angle au sommet de la nappe supérieure, à injecter le combustible de la nappe inférieure dans une zone basse de la chambre de combustion et qui comporte un volume torique de centre B avec un fond plat d'une manière telle que l'axe C1 des jets de combustible de la nappe soit situé entre le centre B et le téton

Les autres caractéristiques et avantages de l'invention vont apparaître maintenant à la lecture de la description qui va suivre, donnée à titre uniquement illustratif et non limitatif, et à laquelle sont annexées :
- la figure 1 qui montre un moteur à combustion interne selon l'invention et
- la figure 2 qui est une vue partielle à grande échelle d'une demi-section du profil du bol de piston du moteur de la figure 1 .

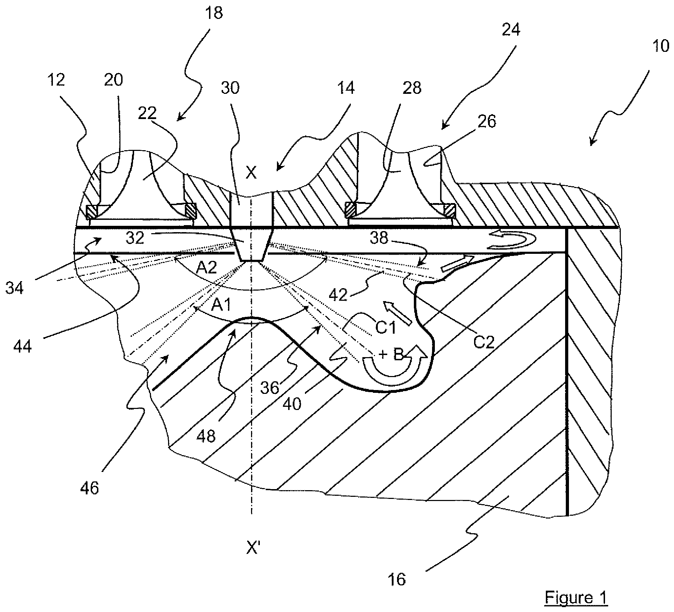

En se référant à la figure 1, un moteur à combustion interne à injection directe à allumage par compression comprend au moins un cylindre 10, une culasse 12 fermant le cylindre en partie haute, des moyens d'injection de combustible 14 portés par la culasse et un piston 16 d'axe XX' coulissant dans le cylindre en un mouvement rectiligne alternatif.

Par combustible, il est entendu un carburant liquide, comme du Diesel, du kérosène ou tout autre combustible ayant les caractéristiques physico-chimiques permettant le fonctionnement d'un moteur de type allumage par compression incluant un système d'injection directe de ce combustible.

Ce moteur comprend également un moyen d'échappement 18 des gaz brûlés avec au moins une tubulure d'échappement 20 dont l'ouverture peut être contrôlée par tous moyens, comme par exemple une soupape d'échappement 22 et un moyen d'admission 24 d'un comburant avec au moins une tubulure d'admission 26 dont l'ouverture peut être contrôlée par tous moyens, comme par exemple une soupape d'admission 28.

Par le terme comburant, il est compris de l'air à pression ambiante ou de l'air suralimenté ou encore un mélange d'air (suralimenté ou non) avec des gaz brûlés.

Les moyens d'injection comprennent au moins un injecteur de combustible 30, de préférence disposé dans l'axe XX' du piston dont le nez 32 comporte une multiplicité d'orifices au travers desquels le combustible est pulvérisé et projeté en direction de la chambre de combustion 34 du moteur.

C'est à partir de ces moyens d'injection que le combustible projeté forme au moins deux nappes de jets de combustible, ici deux nappes 36 et 38 de jets de combustibles 40 et 42, qui, dans l'exemple montré, ont un axe général confondu avec celui du piston 16 tout en étant situées axialement l'une au-dessus de l'autre.

Plus précisément, la nappe 36 qui est située le plus près du piston 16 est dénommée dans la suite de la description nappe inférieure alors que la nappe 38 placée le plus loin de ce piston est appelée nappe supérieure.

Comme visible sur la figure 1, ces deux nappes forment des angles de nappe A1 et A2 différents l'un de l'autre. Par angle de nappe, il est entendu l'angle au sommet que forme le cône issu de l'injecteur et dont la paroi périphérique fictive passe par tous les axes C1 et C2 des jets de combustible 40 et 42.

Avantageusement, l'angle de nappe A1 de la nappe basse est au plus égal à 105°, de préférence compris entre 40° et 75°, alors que l'angle de nappe A2 de la nappe haute est au plus égal à 180°, de préférence compris entre 150° et 180°.

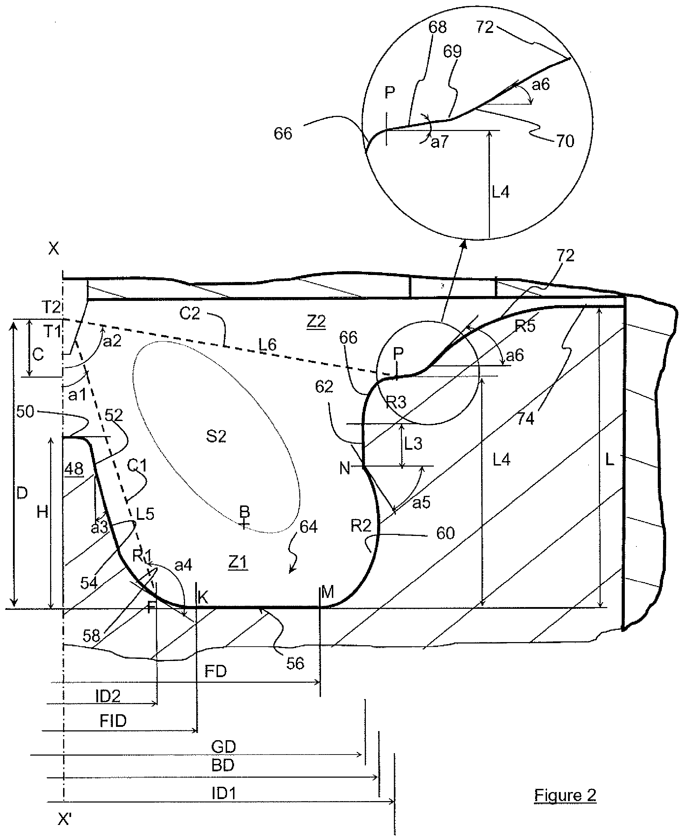

Pour des raisons de simplification dans la suite de la description l'angle a1 correspond à A1/2 alors que l'angle a2 correspond à A2/2 (Voir figure 2).

L'écart entre les deux angles de nappe est donc d'au moins 50° afin de limiter les recouvrements de jets de combustible entres les deux nappes et donc la formation de polluants, tels que les suies.

Bien entendu, il peut être prévu que les moyens d'injection ne soient pas disposés dans l'axe XX', mais dans ce cas, l'axe général des nappes de jets de combustible issues de l'injecteur de combustible est pour le moins sensiblement parallèle à cet axe XX'.

De même, il peut être prévu que chaque nappe soit portée par un injecteur distinct (injecteur simple nappe) avec un ciblage dédié dans des zones distinctes de la chambre de combustion.

La chambre de combustion 34 est délimitée par la face interne de la culasse 12 en vis à vis du piston, la paroi interne circulaire du cylindre 10 et la face supérieure 44 du piston 16.

Cette face supérieure du piston comporte un bol concave 46, ici d'axe confondu avec celui du cylindre, dont la concavité est tournée vers la culasse et qui loge un téton 48 situé sensiblement au centre du bol, qui s'élève vers la culasse 12, en étant de préférence coaxial avec l'axe des nappes de combustible issues de l'injecteur 30.

Bien entendu, il peut être prévu que l'axe du bol ne soit pas coaxial avec celui du cylindre mais l'essentiel réside dans la disposition selon laquelle l'axe de la nappe de jets de combustible, l'axe du téton et l'axe du bol soient de préférence confondus.

En se rapportant en plus à la figure 2, le téton 48, de forme générale tronconique, comporte un sommet 50, se poursuivant, en s'écartant symétriquement de l'axe XX' vers l'extérieur du piston 16, par une surface inclinée 52 sensiblement rectiligne se poursuivant par un flanc inclinée 54 pour arriver à un fond 56 du bol.

Bien entendu et cela sans sortir du cadre de l'invention, la surface inclinée 52 peut être inexistante (longueur nulle) et le flanc incliné 54 raccorde alors le sommet du téton au fond du bol.

Dans l'exemple de la figure 2, le fond de ce bol est matérialisé par la surface 56 sensiblement plane et est raccordé d'un côté, au point K, à une surface arrondie concave 58 en arc de cercle de rayon R1, dite surface arrondie interne, raccordée au bas du flanc incliné 54 et est raccordé, de l'autre côté, au point M, à une autre surface arrondie concave 60 en arc de cercle de rayon R2, dite surface arrondie externe, raccordée par l'autre de ses extrémités à une paroi latérale 62, ici sensiblement verticale, à un point N.

Les deux surfaces arrondies 58 et 60 ainsi que la surface plane 56 délimitent ainsi la partie basse d'un volume torique, ici un tore de section sensiblement cylindrique 64.

La paroi latérale 62 se poursuit, toujours en s'écartant de l'axe XX', par une surface arrondie convexe 66 en arc de cercle de rayon R3, dite réentrant, aboutissant à un plan inclinée 68 relié à une surface d'inflexion concave 69 raccordée à une surface sensiblement plane 70. Cette surface plane se continue par une surface convexe externe 72 en arc de cercle de rayon R5 qui arrive à une surface plane 74 s'avançant jusqu'au voisinage de la paroi du cylindre.

La chambre de combustion comprend ainsi deux zones distinctes Z1 et Z2 dans lesquelles s'effectue le mélange entre le comburant qu'elles contiennent (air -suralimenté ou non- ou mélange d'air et de gaz brûlés recirculés) et le combustible provenant de l'injecteur ainsi que la combustion du mélange carburé ainsi formé.

La zone 1, délimitée par le téton 48, le tore 64 du fond du bol, la paroi 62 et la surface arrondie convexe 66, forme la zone basse de la chambre de combustion qui est associée à la nappe inférieure 36 de jets de combustible d'axe C1. La zone Z2, démarquée par le plan incliné 68, la surface concave 69, la surface sensiblement plane 70, la surface convexe 72, la surface plane 74, la paroi interne périphérique du cylindre et la culasse 12, constitue la zone haute de cette chambre qui est associée à la nappe supérieure 38 de jets de combustible d'axe C2.

Dans cette configuration, le bol comprend, pour une position du piston proche du point mort haut :
- un diamètre externe de fond de bol FD avec un rayon considéré entre l'axe XX' et le point M qui fait la jonction entre la surface plane 56 et la surface 60 de rayon R2.
- un diamètre interne de fond de bol FID avec un rayon considéré entre l'axe XX' et le point K qui fait la jonction entre la surface plane 56 et la surface 58 de rayon R1.
- un diamètre de l'ouverture de bol BD avec un rayon considéré au voisinage du fond du bol et correspondant à une distance prise entre l'axe XX' et le point le plus éloigné de la surface concave externe 60,
- un diamètre de col GD avec un rayon qui correspond à la distance entre l'axe XX' et la paroi verticale 62 qui délimite la section de sortie de ce bol,
- un diamètre d'injection haut ID1 avec un rayon qui correspond à la distance entre l'axe XX' et le début de la surface d'inflexion 69 au point P entre le plan incliné 68 et la surface concave 70 en délimitant une longueur L6 des jets 38 entre l'origine T2 de l'axe C2 des jets sur l'axe du nez de l'injecteur et le point P et qui répond à la formule ID1/sin(a2),
- une longueur développée de la demi-coupe diamétrale Cb du bol-constituée par la longueur depuis l'intersection du sommet du téton avec l'axe XX' jusqu'à la paroi du cylindre,
- une hauteur H de téton entre le fond du bol au point M jusqu'au sommet du téton,
- une hauteur L du bol entre le fond du bol au point M jusqu'à la surface plane 74,
- une hauteur de jonction L3, qui correspond à l'étendue de la paroi latérale 62, considérée entre la fin de la surface arrondie externe 60 au point N et le début de la surface arrondie externe 66,
- une hauteur L4 considérée entre le point P et le point M,
- un angle d'inclinaison a3 par rapport à une verticale pour le flanc incliné 54,
- un angle d'inclinaison a4 formé par l'axe principal C1 des jets de combustible de la nappe inférieure 36 impactant le tore avec la tangente au point d'impact F en délimitant une longueur L5 des jets 40 entre l'origine T1 de l'axe C1 des jets sur l'axe du nez de l'injecteur et le point F. Cette longueur L5 répond à la formule ID2/sin(a1) avec ID2 qui correspond à un diamètre d'injection bas avec un rayon qui correspond à la distance entre l'axe XX' et le point F.
- un angle d'inclinaison a5 considéré à la tangence de la surface arrondie externe 60 avec la paroi latérale 62 au point N,
- un angle d'inclinaison a6 par rapport à l'horizontal et la tangente à la paroi sensiblement plane 70,
- un angle d'inclinaison a7 par rapport à l'horizontale et le plan incliné 68 au point d'intersection P.

Tous ces paramètres sont appréciés pour une position du piston 16 au voisinage du point mort haut qui correspond à une distance D considérée entre le point M et l'origine T2 de l'axe C2 des jets 42.

Plus précisément, cette distance D est égale à la somme de la hauteur L4 et de la hauteur C, hauteur C qui correspond à la hauteur axiale entre l'origine T2 et le point P. Cette hauteur correspond à la formule ID1/tan(a2).

Ainsi les paramètres dimensionnels et angulaires de ce bol satisfont à au moins l'une des conditions suivantes :
- l'angle a4 est supérieur à 100°. Ceci revient à faire impacter les jets de combustible de la nappe inférieure sur la surface descendante 58 de rayon R1 et à rediriger ce jet de combustible vers la surface plane 56 et la surface 60 de rayon R2 et donc d'assurer un mouvement aérodynamique dans le tore remontant vers le haut et le centre du cylindre, ce qui permet de minimiser d'autant plus l'interaction avec la nappe supérieure;
- l'angle a5 doit être positif et inférieur à 60°. Préférentiellement, il doit être de l'ordre de 30° à 40° afin de diriger les jets de combustible 40 de la nappe inférieure 36 vers le volume de comburant S2 pour utiliser le comburant de cette zone tout en limitant la remontée de ce combustible vers la nappe supérieure 38;
- la position du haut du téton 48 est la plus proche possible du nez 32 de l'injecteur 30 afin de limiter le volume de comburant sous l'injecteur qui ne sera pas impacté par les jets de combustible. Ainsi le rapport H/L est supérieur à 40% et préférentiellement supérieur à 60%;
- l'angle a3 est sensiblement égal à l'angle a1 de la nappe inférieure. Ainsi l'axe général des jets de la nappe inférieure tangente le flanc 54 du téton. Les jets inférieurs peuvent ainsi impacter la surface arrondie 58 en se vaporisant totalement avant d'impacter le piston;
- le volume de comburant S2 entre les deux nappes est non nul puisque l'interaction entre nappes est néfaste pour les polluants. Le volume S2 doit néanmoins être minimisé. Pour se faire, la longueur de jonction L3 entre le tore et le réentrant 66 (surface arrondie convexe de centre R3) doit être telle que L3/(2^{∗}longueur de R2)<1 ou (L3/longueur de R2<2) afin d'assurer que le volume de comburant S2 disponible entre les nappes supérieure 38 et inférieure 36 est faible par rapport au volume de combustible généré par les jets de la nappe inférieure;
- la deuxième zone de combustion Z2 située dans la partie haute du piston qui débute à partir du réentrant 66 est destinée aux jets de combustible 42 de la nappe supérieure 38;
- le volume de combustion de la zone Z2 est au moins égal au dixième du volume total du bol;
- la zone, dite de chasse, est formée par le plan incliné 68, la surface concave 69, la surface plane 70, la surface convexe 72 et la surface plane 74. L'angle a6 est compris entre 10° et 75°, ce qui permet d'éclater les jets de combustible 42 pour créer un mouvement aérodynamique au-dessus du piston et additionnellement d'aller utiliser le comburant dans la zone de chasse. Cet aérodynamique permet un meilleur mélange combustible/comburant au-dessus du piston, notamment pendant la phase de détente du moteur et favoriser ainsi l'oxydation des gaz brûlés;
- pour favoriser l'impact des jets 42 sur la chasse, une surface 68 de guidage est prévue entre le réentrant 66 et la surface 70. Cette surface de guidage peut être arrondie en prolongement du réentrant ou sensiblement plane. Cette surface de guidage sert à concentrer les jets de combustible 42 et à les guider vers la surface convexe 72. Ainsi cette surface de guidage a un angle a7 au point d'intersection P dont l'écart avec l'angle a2 est de moins de 45°.
- les surfaces 58 et 60 sont obligatoirement raccordées par un fond plat de longueur (de dimension égale à FD moins FID) non nulle
- l'emplacement de la surface d'inflexion 69 est tel que les distances (L5+(FD-FID)) et L6 sont approximativement du même ordre (0.5<(L5+(FD-FID))/L6<2). Ainsi, avantageusement les jets de combustible des nappes inférieure et supérieure impacteront sensiblement en même temps respectivement la surface 60 du tore et la zone d'inflexion.
- le diamètre ID1 doit être tel que ID1/GD>1 et ID1<(GD+ (Cb-GD)^{∗}2/3). Ceci permet aux jets de combustible 42 d'optimiser l'aérodynamique au-dessus du piston.

De plus,
- le rapport BD/L est inférieur à 6, préférentiellement inférieur à 4,
- le rapport R2/R1 est inférieur à 1, préférentiellement inférieur à 0.6,
- le rapport FD/BD est inférieur à 1,
- le rapport Cb/BD est inférieur à 2 pour conserver une vaporisation complète du combustible et éviter le mouillage de la paroi du cylindre,
- le rapport GD/BD est compris entre 0.7 et 1 pour l'aérodynamique du tore et la remontée des jets de combustible,
- le rapport H/L est supérieur à 40%, préférentiellement supérieur à 60% pour minimiser le volume de comburant entre le nez de l'injecteur et le téton,
- le rapport (L5+(FD-FID))/L6 est compris entre 0.5 et 2 pour l'impact des deux nappes de jets de combustible au même moment sur la zone d'inflexion et la partie remontante du tore,
- A1 est compris entre 40° et 105° avec a1 =A1/2,
- A2 est compris entre 150° et 180° avec a2=A2/2,
- a3 est sensiblement égal à a1,
- a4 est supérieur à 100°,
- a5 est compris entre 0° et 60°, de préférence entre 10° et 50°,
- l'angle a6 est compris entre 15° et 75°,
- a7-a2 est inférieur à 45°,
- le rapport ID1/GD est supérieur à 1,
- ID1 est inférieur à (GD+(Cb-GD)^{∗}2/3),

Ainsi, grâce à ce paramétrage du bol, les jets de combustible de la nappe inférieure 36 ciblent directement le tore 64 et n'impactent pas directement le réentrant 66.

De ce fait, la combustion du mélange combustible/comburant inférieur se déroule essentiellement dans le volume bas du piston, c'est-à-dire dans le tore alors que la combustion du mélange combustible/comburant supérieure se déroule essentiellement dans la chasse et au-dessus du piston.

Ce paramétrage de bol adapté aux taux de compression faibles, par exemple entre 13.5 et 16.5, permet d'assurer que l'interaction des jets de la nappe supérieure avec les jets de la nappe inférieure est beaucoup plus limitée, ce qui permet d'homogénéiser le mélange comburant/combustible tout en respectant des contraintes de tenue mécanique à forte ou très forte charge.

## Revendications

1. Moteur à combustion interne à injection directe à allumage par compression comprenant au moins un cylindre (10), une culasse (12) portant des moyens d'injection de combustible (14), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46), ledit moteur comportant des moyens d'injection projetant du combustible selon au moins deux nappes de jets de combustible d'angle de nappe différents (A1, A2), une nappe inférieure (36) d'axe de jet C1 et une nappe supérieure (38) d'axe de jet C2, au moins deux zones de mélange (Z1, Z2) de la chambre de combustion, **caractérisé en ce que** les zones forment une zone basse (Z1) et une zone haute (Z2) et **en ce que** la zone basse comporte un volume torique (64) de centre B avec un fond plat (56) dans lequel sont injectés les jets de combustible (40) de la nappe inférieure d'une manière telle que l'axe C1 des jets de la nappe inférieure soit situé entre le centre B et le téton (48), et **en ce que** ladite zone basse (Z1) est délimitée par le téton (48), le volume torique (64) du fond du bol, une paroi latérale verticale (62) et une surface arrondie convexe (66) et la zone haute (Z2) est démarquée par un plan incliné (68), une surface concave (69), une surface sensiblement plane (70), une surface convexe (72), et une surface plane (74), et la paroi interne périphérique du cylindre et la culasse (12).

2. Moteur à combustion interne selon la revendication 1, **caractérisé en ce que** les nappes de jets de combustible (24, 26) sont situées axialement l'une au-dessus de l'autre.

3. Moteur à combustion interne selon la revendication 1 ou 2, **caractérisé en ce que** les moyens d'injection comportent au moins deux injecteurs projetant du combustible selon une nappe de jets de combustible d'angle de nappe différent l'un de l'autre.

4. Moteur à combustion interne selon l'une des revendications précédentes, **caractérisé en ce que** l'angle de nappe (A1) de l'une (24) des nappes est au plus égal à 105° alors que l'angle de nappe (A2) de l'autre des nappes est au moins égale à 150°.

5. Moteur selon l'une des revendication précédentes dans lequel le bol comprend un volume torique (64) de rayon R1 et R2, un diamètre de fond de bol FD, un diamètre interne de fond de bol FID, un diamètre de l'ouverture de bol BD, un diamètre de col GD, un diamètre d'injection haut ID1, une longueur développée de la coupe diamétrale 2^{∗}Cb du bol, une hauteur H de téton, et une hauteur L du bol, **caractérisé en ce que** les dimensions du bol satisfont à au moins l'une des condition suivantes :
• le rapport BD/L est inférieur à 6, préférentiellement inférieur à 4,
• le rapport FD/BD est inférieur à 1,
• FD-FID est strictement positif
• le rapport 2^{∗}Cb/BD est inférieur à 2,
• le rapport GD/BD est compris entre 0.7 et 1,
• le rapport H/L est supérieur à 50%, préférentiellement supérieur à 60%
• le rapport R2/R1 est inférieur à 1, préférentiellement inférieur à 0.6,
• le rapport ID1/GD est supérieur à 1,
• ID1 est inférieur à (GD+(2^{∗}Cb-GD)^{∗}2/3).

6. Moteur selon l'une des revendications précédentes dans lequel le bol comprend une surface arrondie externe (60) raccordée à une paroi latérale (62) se poursuivant par une surface arrondie convexe (66) aboutissant à un plan inclinée (68) relié à une surface d'inflexion concave (69) raccordée à une surface sensiblement plane (70), un angle d'inclinaison (a3) pour le flanc incliné (54) du téton (48), un angle d'inclinaison (a4) formé par l'axe principal (C1) des jets de combustible (40) de la nappe inférieure (36) injectés dans le tore (64) en impactant le tore en un point (F) et par la tangente au point d'impact (F), un angle d'inclinaison (a5) considéré à la tangence de la surface arrondie externe (60) avec la paroi latérale (62), et un angle d'inclinaison (a6) par rapport à l'horizontale et la tangente à la paroi sensiblement plane (70) et dans lequel le bol satisfait à au moins l'une des conditions suivantes :
• a3 est sensiblement égale au demi-angle de nappe de jets A1/2 de la nappe basse,
• a4 est supérieur à 100°,
• a5 est compris entre 0° et 60°, de préférence entre 30° et 40°,
• a6 est compris entre 15° et 75.

7. Procédé d'injection pour un moteur à combustion interne à injection directe à allumage par compression comprenant au moins un cylindre (10), une culasse (12) portant des moyens d'injection de combustible (14), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46), ledit procédé consistant à injecter le combustible selon au moins deux nappes de jets de combustible d'angle de nappe différents (A1, A2), une nappe inférieure (36) d'axe de jet C1 et une nappe supérieure (38) d'axe de jet C2, au moins deux zones de mélange (Z1, Z2) de la chambre de combustion formant une zone basse (Z1) et une zone haute (Z2), **caractérisé en ce qu'**il consiste, pour une position D du piston (16) considérée entre le fond du bol (M) et l'origine (T2) des jets de combustible de la nappe supérieure, correspondant sensiblement à D=L4 + ID1/tan(a2) où L4 est la hauteur entre le fond du bol et le point d'impact (P) des jets de combustible de la nappe supérieure, ID1 est le diamètre d'injection haut considéré entre les points d'impact (P) et a2 qui est le demi angle au sommet de la nappe supérieure, à injecter le combustible de la nappe inférieure dans ladite zone basse (Z1) de la chambre de combustion et qui comporte un volume torique (64) de centre B avec un fond plat (56) d'une manière telle que l'axe C1 des jets de combustible de la nappe soit situé entre le centre B et le téton (48) et **en ce que** ladite zone basse (Z1) est délimitée par le téton (48), le volume torique (64) du fond du bol, une paroi latérale verticale (62) et une surface arrondie convexe (66) et la zone haute (Z2) est démarquée par un plan incliné (68), une surface concave (69), une surface sensiblement plane (70), une surface convexe (72), et une surface plane (74), et la paroi interne périphérique du cylindre et la culasse (12).

## Patentansprüche

1. Brennkraftmaschine mit Direkteinspritzung und mit Kompressionszündung, umfassend wenigstens einen Zylinder (10), einen Zylinderkopf (12), der Mittel zur Einspritzung von Kraftstoff (14) trägt, einen Kolben (16), der in diesem Zylinder gleitet, einen Brennraum (34), der auf einer Seite von der Oberseite (44) des Kolbens begrenzt wird, die einen Ansatz (48) aufweist, der sich in Richtung des Zylinderkopfes erhebt und in der Mitte einer konkaven Schale (46) angeordnet ist, wobei die Brennkraftmaschine Einspritzmittel, die Kraftstoff in wenigstens zwei Schichten von Kraftstoffstrahlen mit unterschiedlichen Schichtwinkeln (A1, A2) spritzen, einer unteren Schicht (36) mit einer Strahlachse C1 und einer oberen Schicht (38) mit einer Strahlachse C2, und wenigstens zwei Mischbereiche (Z1, Z2) des Brennraumes aufweist, **dadurch gekennzeichnet, dass** die Bereiche einen niedrigen Bereich (Z1) und einen hohen Bereich (Z2) bilden, und dadurch, dass der niedrige Bereich ein torisches Volumen (64) mit einem Mittelpunkt B und mit einem flachen Boden (56) aufweist, in welches die Kraftstoffstrahlen (40) der unteren Schicht auf eine solche Weise eingespritzt werden, dass sich die Achse C1 der Strahlen der unteren Schicht zwischen dem Mittelpunkt B und dem Ansatz (48) befindet, und dadurch, dass der niedrige Bereich (Z1) von dem Ansatz (48), dem torischen Volumen (64) des Bodens der Schale, einer vertikalen Seitenwand (62) und einer konvexen gerundeten Fläche (66) begrenzt wird und der hohe Bereich (Z2) durch eine geneigte Ebene (68), eine konkave Fläche (69), eine im Wesentlichen ebene Fläche (70), eine konvexe Fläche (72) und eine ebene Fläche (74) sowie die innere Umfangswand des Zylinders und den Zylinderkopf (12) abgegrenzt wird.

2. Brennkraftmaschine nach Anspruch 1, **dadurch gekennzeichnet, dass** sich die Schichten von Kraftstoffstrahlen (24, 26) axial übereinander befinden.

3. Brennkraftmaschine nach Anspruch 1 oder 2, **dadurch gekennzeichnet, dass** die Einspritzmittel wenigstens zwei Einspritzdüsen aufweisen, die jeweils Kraftstoff in einer Schicht von Kraftstoffstrahlen einspritzen, wobei die Schichtwinkel voneinander verschieden sind.

4. Brennkraftmaschine nach einem der vorhergehenden Ansprüche, **dadurch gekennzeichnet, dass** der Schichtwinkel (A1) der einen (24) der Schichten höchstens gleich 105° ist, während der Schichtwinkel (A2) der anderen der Schichten mindestens gleich 150° ist.

5. Brennkraftmaschine nach einem der vorhergehenden Ansprüche, wobei die Schale ein torisches Volumen (64) mit Radius R1 und R2, einen Durchmesser des Schalenbodens FD, einen Innendurchmesser des Schalenbodens FID, einen Durchmesser der Schalenöffnung BD, einen Halsdurchmesser GD, einen hohen Einspritzungsdurchmesser ID1, eine gestreckte Länge des diametralen Schnitts 2^{∗}Cb der Schale, eine Höhe H des Ansatzes und eine Höhe L der Schale umfasst, **dadurch gekennzeichnet, dass** die Abmessungen der Schale wenigstens einer der folgenden Bedingungen genügen:
• das Verhältnis BD/L ist kleiner als 6, vorzugsweise kleiner als 4,
• das Verhältnis FD/BD ist kleiner als 1,
• FD-FID ist streng positiv,
• das Verhältnis 2^{∗}Cb/BD ist kleiner als 2,
• das Verhältnis GD/BD liegt zwischen 0,7 und 1,
• das Verhältnis H/L ist größer als 50 %, vorzugsweise größer als 60 %,
• das Verhältnis R2/R1 ist kleiner als 1, vorzugsweise kleiner als 0,6,
• das Verhältnis ID1/GD ist größer als 1,
• ID1 ist kleiner als (GD+(2^{∗}Cb-GD)^{∗}2/3).

6. Brennkraftmaschine nach einem der vorhergehenden Ansprüche, wobei die Schale umfasst: eine äußere gerundete Fläche (60), die sich an eine Seitenwand (62) anschließt, die sich in einer konvexen gerundeten Fläche (66) fortsetzt, die an eine geneigte Ebene (68) stößt, die mit einer konkaven Biegungsfläche (69) verbunden ist, die sich an eine im Wesentlichen ebene Fläche (70) anschließt, einen Neigungswinkel (a3) für die geneigte Flanke (54) des Ansatzes (48), einen Neigungswinkel (a4), der von der Hauptachse (C1) der Kraftstoffstrahlen (40) der unteren Schicht (36), die in den Torus (64) eingespritzt werden und dabei in einem Punkt (F) auf den Torus auftreffen, und von der Tangente im Auftreffpunkt (F) gebildet wird, einen Neigungswinkel (a5), der am Berührungspunkt der äußeren gerundeten Fläche (60) mit der Seitenwand (62) betrachtet wird, und einen Neigungswinkel (a6) der Tangente an die im Wesentlichen ebene Wand (70) in Bezug auf die Horizontale, und wobei die Schale wenigstens einer der folgenden Bedingungen genügt:
• a3 ist im Wesentlichen gleich dem halben Winkel der Schicht von Strahlen A1/2 der unteren Schicht,
• a4 ist größer als 100°,
• a5 liegt zwischen 0° und 60°, vorzugsweise zwischen 30° und 40°,
• a6 liegt zwischen 15° und 75°.

7. Einspritzverfahren für eine Brennkraftmaschine mit Direkteinspritzung und mit Kompressionszündung, welche wenigstens einen Zylinder (10), einen Zylinderkopf (12), der Mittel zur Einspritzung von Kraftstoff (14) trägt, einen Kolben (16), der in diesem Zylinder gleitet, einen Brennraum (34), der auf einer Seite von der Oberseite (44) des Kolbens begrenzt wird, die einen Ansatz (48) aufweist, der sich in Richtung des Zylinderkopfes erhebt und in der Mitte einer konkaven Schale (46) angeordnet ist, umfasst, wobei das Verfahren darin besteht, den Kraftstoff in wenigstens zwei Schichten von Kraftstoffstrahlen mit unterschiedlichen Schichtwinkeln (A1, A2) einzuspritzen, einer unteren Schicht (36) mit einer Strahlachse C1 und einer oberen Schicht (38) mit einer Strahlachse C2, wobei wenigstens zwei Mischbereiche (Z1, Z2) des Brennraumes einen niedrigen Bereich (Z1) und einen hohen Bereich (Z2) bilden, **dadurch gekennzeichnet, dass** es darin besteht, für eine betrachtete Position D des Kolbens (16) zwischen dem Boden der Schale (M) und dem Ausgangspunkt (T2) der Kraftstoffstrahlen der oberen Schicht, die im Wesentlichen D = L4 + ID1/tan(a2) entspricht, wobei L4 die Höhe zwischen dem Boden der Schale und dem Auftreffpunkt (P) der Kraftstoffstrahlen der oberen Schicht ist, ID1 der zwischen den Auftreffpunkten (P) betrachtete hohe Einspritzungsdurchmesser ist und a2 der halbe Winkel am Scheitelpunkt der oberen Schicht ist, den Kraftstoff der unteren Schicht in den niedrigen Bereich (Z1) des Brennraumes, welcher ein torisches Volumen (64) mit einem Mittelpunkt B und mit einem flachen Boden (56) aufweist, auf eine solche Weise einzuspritzen, dass sich die Achse C1 der Kraftstoffstrahlen der Schicht zwischen dem Mittelpunkt B und dem Ansatz (48) befindet, und dadurch, dass der niedrige Bereich (Z1) von dem Ansatz (48), dem torischen Volumen (64) des Bodens der Schale, einer vertikalen Seitenwand (62) und einer konvexen gerundeten Fläche (66) begrenzt wird und der hohe Bereich (Z2) durch eine geneigte Ebene (68), eine konkave Fläche (69), eine im Wesentlichen ebene Fläche (70), eine konvexe Fläche (72) und eine ebene Fläche (74) sowie die innere Umfangswand des Zylinders und den Zylinderkopf (12) abgegrenzt wird.

## Claims

1. A compression-ignition direct-injection internal-combustion engine comprising at least a cylinder (10), a cylinder head (12) carrying fuel injection means (14), a piston (16) sliding in this cylinder, a combustion chamber (34) delimited on one side by the upper face (44) of the piston comprising a teat (48) extending in the direction of the cylinder head and arranged in the centre of a concave bowl (46), said engine comprising injection means projecting fuel in at least two fuel jet sheets with different sheet angles (A1, A2), a lower sheet (36) of jet axis C1 and an upper sheet (38) of jet axis C2, at least two mixing zones (Z1, Z2) of the combustion chamber, **characterized in that** the zones form a low zone (Z1) and a high zone (Z2) and **in that** the low zone comprises a toroidal volume (64) of centre B with a flat bottom (56) into which the fuel jets (40) of the lower sheet are injected in such a way that the axis C1 of the jets of the lower sheet is located between the centre B and the teat (48), and **in that** said low zone (Z1) is delimited by the teat (48), the toroidal volume (64) of the bottom of the bowl, a vertical lateral wall (62) and a convex rounded surface (66), and the high zone (Z2) is demarcated by an inclined plane (68), a concave surface (69), an essentially plane surface (70), a convex surface (72), and a plane surface (74), and the peripheral internal wall of the cylinder and the cylinder head (12).

2. An internal-combustion engine as claimed in claim 1, **characterized in that** the fuel jet sheets (24, 26) are arranged axially above one another.

3. An internal-combustion engine as claimed in any one of claims 1 or 2, **characterized in that** the injection means comprise at least two injectors projecting fuel in a fuel jet sheet with a different sheet angle from one another.

4. An internal-combustion engine as claimed in any one of the previous claims, **characterized in that** the sheet angle (A1) of one (24) of the sheets is at most equal to 105° while the sheet angle (A2) of the other of the sheets is at least equal to 150°.

5. An engine as claimed in any one of the previous claims, wherein the bowl comprises a toroidal volume (64) of radius R1 and R2, a bowl bottom diameter FD, a bowl bottom inside diameter FID, a bowl opening diameter BD, a neck diameter GD, an upper injection diameter ID1, a developed length of the diametral section 2^{∗}Cb of the bowl, a teat height H and a bowl height L, **characterized in that** the dimensions of the bowl meet at least one of the following conditions:
• the ratio BD/L is less than 6, preferably less than 4,
• the ratio FD/BD is less than 1,
• FD-FID is strictly positive,
• the ratio 2^{∗}Cb/BD is less than 2,
• the ratio GD/BD ranges between 0.7 and 1,
• the ratio H/L is greater than 50 %, preferably greater than 60 %,
• the ratio R2/R1 is less than 1, preferably less than 0.6,
• the ratio ID1/GD is greater than 1,
• ID1 is less than (GD+(2^{∗}Cb-GD)^{∗}2/3).

6. An engine as claimed in any one of the previous claims, wherein the bowl comprises an outer rounded surface (60) connected to a lateral wall (62) continuing by a convex rounded surface (66) leading to an inclined plane (68) connected to a concave inflection surface (69) connected to a substantially plane surface (70), an angle of inclination (a3) for the inclined flank (54) of the teat (48), an angle of inclination (a4) formed by the principal axis (C1) of the fuel jets (40) of the lower sheet (36) injected into the torus (64) by impacting the torus at a point (F) and by the tangent to the impact point (F), an angle of inclination (a5) considered at the tangency of the outer rounded surface (60) with the lateral wall (62), and an angle of inclination (a6) with respect to the horizontal and the tangent to the substantially plane wall (70), and wherein the bowl meets at least one of the following conditions:
• a3 is substantially equal to the jet sheet half angle A1/2 of the lower sheet,
• a4 is greater than 100°,
• a5 ranges between 0° and 60°, preferably between 30° and 40°,
• a6 ranges between 15° and 75°.

7. An injection method for a compression-ignition direct-injection internal-combustion engine comprising at least a cylinder (10), a cylinder head (12) carrying fuel injection means (14), a piston (16) sliding in this cylinder, a combustion chamber (34) delimited on one side by the upper face (44) of the piston comprising a teat (48) extending in the direction of the cylinder head and arranged in the centre of a concave bowl (46), said method consisting in injecting the fuel in at least two fuel jet sheets with different sheet angles (A1, A2), a lower sheet (36) of jet axis C1 and an upper sheet (38) of jet axis C2, at least two mixing zones (Z1, Z2) of the combustion chamber forming a low zone (Z1) and a high zone (22), **characterized in that** it consists, for a position D of the piston (16) considered between the bottom of the bowl (M) and the origin (T2) of the fuel jets of the upper sheet, which substantially corresponds to D=L4 + ID1/tan(a2) where L4 is the height between the bowl bottom and the point (P) of impact of the fuel jets of the upper sheet, ID1 is the upper injection diameter considered between impact points (P) and a2 which is the half angle at the top of the upper sheet, in injecting the fuel of the lower sheet into said low zone (Z1) of the combustion chamber and which comprises a toroidal volume (64) of centre B with a flat bottom (56) such that the axis C1 of the fuel jets of the sheet is located between the centre B and the teat (48), and **in that** said low zone (Z1) is delimited by the teat (48), the toroidal volume (64) of the bottom of the bowl, a vertical lateral wall (62) and a convex rounded surface (66), and the high zone (Z2) is demarcated by an inclined plane (68), a concave surface (69), an essentially plane surface (70), a convex surface (72), and a plane surface (74), and the peripheral internal wall of the cylinder and the cylinder head (12).
